# EUROPEAN PATENT APPLICATION

(11) **EP 1 863 264 A1**
(43) Date of publication of application: **05.12.2007**
(21) Application number: 06722174.7
(22) Date of filing: 28.03.2006
(51) Int. Cl.: H04M 3/42

(54) **A METHOD FOR REALIZING THE RINGBACK DURING THE CALL FORWARDING**

(30) Priority: 26.04.2005 CN 200510066290
(71) Applicant: Huawei Technologies Co., Ltd., Longgang District, Shenzhen Guangdong 518129 (CN)
(72) Inventor: LI, Mingyu,Huawei Administration Building, 518129 Shenzhen Guangdong (CN)
(74) Representative: Körber, Martin Hans
(86) International application number: PCT/CN2006/000522
(87) International publication number: WO 2006/114036

(57) **Abstract**

A method for providing CRBT includes: an intelligent network service trigger point receiving a call initiated by a calling party to a called party, determining whether the called party is an intelligent network service subscriber, triggering the call to a SCP if the called party is an intelligent network service subscriber; the SCP determining whether the called party subscribers to both a CRBT and a call transfer service, and sending a signaling to a service executing device if the called party subscribers to both a CRBT and a call transfer service; the service executing device determining whether a CRBT transferring flag is set in the signaling, and playing a CRBT customized by the called party if the CRBT transferring flag is set. The solution can avoid a ring back tone reset during call transfer and the calling party can hear a continuous CRBT.

## Description

### FIELD OF THE INVENTION

The present invention relates to ring back tone services in communications system, and particularly to a method for providing ring back tone during a call transfer.

### BACKGROUND OF THE INVENTION

Coloring Ring Back Tone (CRBT) service provides a CRBT customized by a called party rather than monotonous beep tones to a calling party, after the calling party dials the number of the called party and a called terminal of the called party rings. The CRBT is customized by the called party, and may be any kind of alert tone e.g. a song or a recorded speech.

Call transfer service diverts a call to another number preset by the called party when the called party does not answer the call. No-reply transfer is one kind of call transfer service, and diverts a call automatically to another number preset by the called party when the called terminal is idle but is not answered in a period of time.

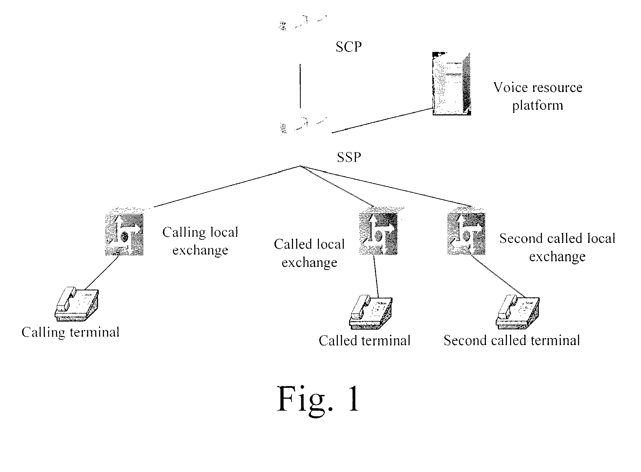

Figure1 shows a schematic diagram illustrating system architecture of Public Switched Telephone Network (PSTN) providing CRBT service during a call transfer. The system may include a calling terminal, a calling local exchange, a Service Switching Point (SSP) of an intelligent network, a Service Control Point (SCP), a voice resource platform, a called terminal, a called local exchange, a second called terminal and a second called local exchange. The calling terminal and the calling local exchange correspond to a calling party, the called terminal and the called local exchange correspond to a called party, and the second called terminal and the second called local exchange correspond to a second called party. If the called party subscribes to a No-reply transfer service in advance and both the called party and the second called party subscribe to CRBT services, when the called party does not answer a call in a preset time period, the call may be diverted to the second called party. The calling local exchange, the called local exchange and the second called local exchange in the network function as a calling switching device, a called switching device and a second called switching device respectively.

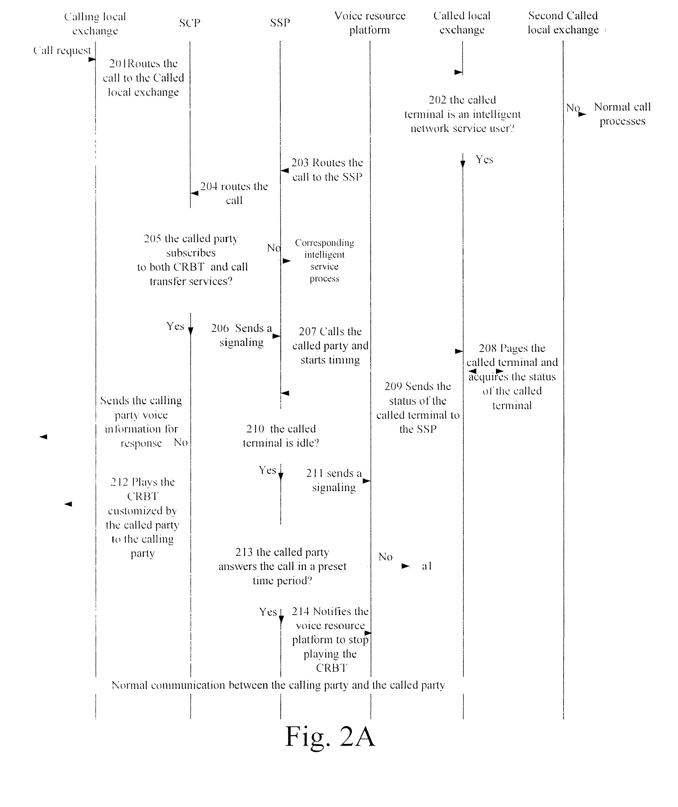

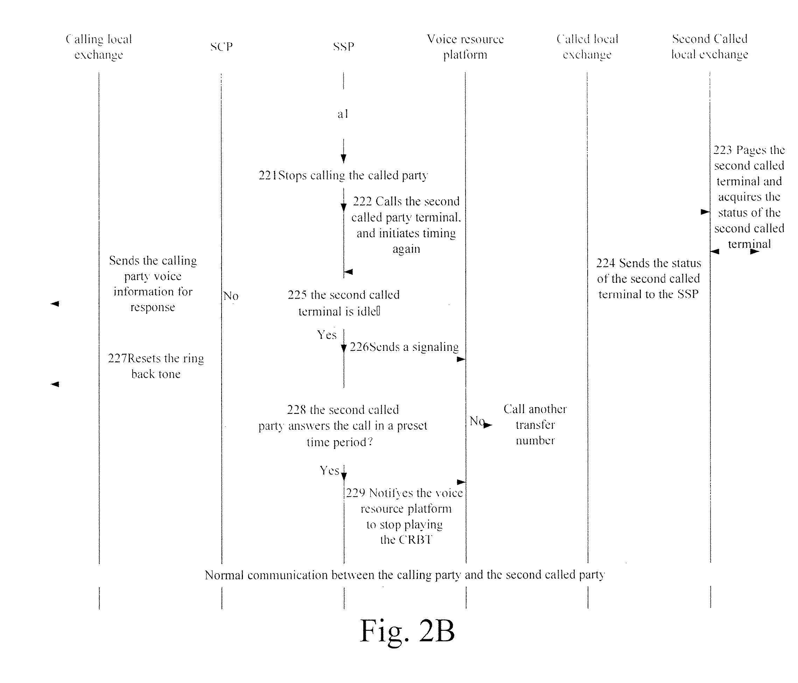

As shown in figures 2A and 2B a no-reply call transfer process with a CRBT service in the prior art is described as follows.

Step 201: A calling party initiates a call to a called party by sending a call request via a calling terminal to a called terminal of the called party. A calling local exchange receives the call request from the calling terminal and routes the call to the called local exchange.

Steps 202 to 204: The called local exchange determines whether the called party subscribes to an intelligent network service according to information stored in the called local exchange. If the called party is an intelligent network service user, the called local exchange routes the call to an SSP, and the SSP routes the call to an SCP. If the called party is not an intelligent network service user, the called local exchange processes the call according to normal call processes.

In the normal call processes, the called local exchange pages the called terminal. If the called terminal is idle, the called local exchange sends a ring tone to the called terminal and sends monotonous beep tones to the calling terminal via the calling local exchange. After the called party answers the call, a voice channel between the calling party and called party is established. And if either of the calling party and called party hangs up, the voice channel is released. If the called terminal is busy, the called local exchange sends to the calling terminal via the calling local exchange voice information played by the called local exchange indicating the status of the called terminal.

Step 205: The SCP determines whether the called party is an active subscriber to both the CRBT service and the No-reply transfer service according to record information stored in the SCP. If the called party is an active subscriber to both the CRBT service and the No-reply transfer service, step 206 and follow-up steps may be performed, otherwise, corresponding intelligent network service may be carried out. The corresponding intelligent network service is an intelligent network service when the called party is not an active subscriber to both the CRBT service and the No-reply transfer service, and the SCP may carry out the intelligent network service.

Step 206: The SCP signals with the SSP. The SSP calls the called party and diverts the call. The signaling sent by the SCP to the SSP may include Time signaling and Connect signaling. The Time signaling is used for indicating that the SSP should start to time upon initiating the call. For example, when the preset time period is 20 seconds and the called party did not answer the call in this time period, the SSP terminates the call to the called party and diverts the call to a second called party. If the called party answers the call within the time period, the SSP establishes a voice channel between the calling party and the called party. The Connect signaling is used for indicating that the SSP should connect the called local exchange, the voice resource platform, and the second called local exchange. In this process the SSP functions as a service executing device for carrying out special services.

Steps 207 to 209: Upon receipt of the signaling from the SCP, the SSP calls the called party and starts timing. Upon receipt of the call from the SSP, the called local exchange pages the called terminal, acquires status of the called terminal, and sends the status of the called terminal to the SSP.

Step 210: The SSP determines whether the called terminal is idle according to the status of the called terminal. If the called terminal is idle, step 211 and follow-up steps may be performed. If the called terminal is busy, the SSP sends to the calling terminal via the calling local exchange voice information played by the called local exchange indicating the status of the called terminal.

Step 211: The SSP sends the voice resource platform a signaling to notify the voice resource platform that a CRBT may be played to the calling party. The signaling includes at least a calling number of the calling party and a called number of the called party.

Step 212: Upon receipt of the signaling from the SSP, the voice resource platform searches for the CRBT customized in advance by the called party according to the called number, and plays the CRBT to the calling party via the calling local exchange.

Steps 213 to 214: The SSP determines whether the called party answers the call in the preset time period. If the called party answers the call in the preset time period, the called terminal may send a response to the called local exchange and the called local exchange sends the response to the SSP. Upon receipt of the response, the SSP notifies the voice resource platform to stop playing the CRBT, and establishes a voice channel between the calling terminal and the called terminal for communication between the calling party and the called party. If the called party does not answer the call in the preset time period, step 221 and follow-up steps may be performed and the call may be diverted to another preset number.

As shown in Figure 2B, steps 221 and 222, the SSP stops calling the called terminal, but calls the second called terminal, and initiates timing again.

Steps 223 and 224: Upon receipt of the call from the SSP, the second called local exchange pages the second called terminal, acquires the status of the second called terminal, and sends the status of the second called terminal to the SSP.

Step 225: The SSP determines whether the second called terminal is idle according to the status of the second called terminal received. If the second called terminal is idle, step 226 may be performed. If the second called terminal is busy, the SSP sends to the calling terminal via the calling local exchange voice information played by the second called local exchange indicating the status of the second called terminal.

Step 226: The SSP sends the voice resource platform a signaling to notify the voice resource platform to play a CRBT customized by the second called party. The signaling may include at least the calling number and the second called number.

Step 227: Upon receipt of the signaling from the SSP, the voice resource platform resets the ring back tone. That is, the SSP stops playing the CRBT customized by the called party to the calling party, searches for the CRBT customized by the second called party according to the second called number in the signaling received, and plays the CRBT customized by the second called party to the calling party via the calling local exchange.

Steps 228 and 229: The SSP determines whether the second called party answers the call in a preset time period. If the second called party answers the call in the preset time period, the second called terminal sends a response to the second called local exchange. The second called local exchange sends the response to the SSP. Upon receipt of the response, the SSP notifies the voice resource platform to stop playing the CRBT, establishes a voice channel between the calling terminal and the second called terminal for communication between the calling party and the second called party. If the second called party did not answer the call in the preset time period, the SSP may call another transfer number. The process is similar to that of calling the second called party. If there is no transfer number available, the SSP releases the call.

However, it can be seem from the above solution that, when a call initiated by a calling party is diverted from a called party to another called panty, the voice resource platform stops playing the CRBT customized by the called party and plays the CRBT customized by the second called party, the calling party may experience an obvious handoff process, because the CRBT heard by the calling party is not a consecutive CRBT.

### SUMMARY OF THE INVENTION

A method for providing ring back tone during call transfer are provided to avoid the ring back tone reset process during call transfer, and ensure user experience.

A method for providing coloring ring back tone during call transfer may include followings. An intelligent network service trigger point receives a call initiated by a calling party to a called party, determines whether the called party is an intelligent network service subscriber, and triggers the call to a Service Control Point if the called party is the intelligent network service subscriber. The Service Control Point determines whether the called party is an active subscriber to both a Coloring Ring Back Tone service and a call transfer service, and sends a signaling to a service executing device if the called party is the active subscriber to both the Coloring Ring Back Tone service and the call transfer service. Upon receipt of the signaling the service executing device determines whether a Coloring Ring Back Tone reset process is needed during a call transfer according to a Coloring Ring Back Tone transferring flag in the signaling, and plays a Coloring Ring Back Tone customized by the called party to the calling party if the Coloring Ring Back Tone reset process is not needed during the call transfer.

The service executing device may be a Service Switching Point, and the process of playing the Coloring Ring Back Tone customized by the called party to the calling party may include: the Service Switching Point paging the called party and acquiring status of the called party, notifying a voice resource platform to play the Coloring Ring Back Tone customized by the called party to the calling party if the called party is idle. if the called party does not answer the call in a preset time period paging, the Service Switching Point pages a second called party, acquires status of the second called party, and plays the Coloring Ring Back Tone customized by the called party to the calling party if the second called is idle.

The service executing device may be a voice resource platform, and the process of playing the Coloring Ring Back Tone customized by the called party to the calling party may include: the voice resource platform paging the called party and acquiring status of the called party, playing the Coloring Ring Back Tone customized by the called party to the calling party if the called party is idle. If the called party does not answer the call in a preset time period paging, the voice resource platform pages a second called party, acquires status of the second called party, and plays the Coloring Ring Back Tone customized by the called party to the calling party if the second called is idle.

The process of sending the signaling to the service executing device by the Service Control Point may include: the Service Control Point sending the signaling to a Service Switching Point, adding routing information of the voice resource platform into the signaling, and sending the signaling to the voice resource platform according to the routing information in the signaling.

The Coloring Ring Back Tone transferring flag may use a bit newly added into the signaling sent by the Service Control Point, or use a reserved bit of the signaling sent by the Service Control Point.

The signaling may be a Connect signaling.

The Coloring Ring Back Tone customized by the called party is customized by use of a called number of the called party or a Unified Message Service UMS number of the called party.

It can be seen from the above solution that, the SSP sends no signaling for playing the CRBT customized by the second called party to the voice resource platform according to the CRBT transferring flag when the called party does not answer and therefore the call is diverted, because the CRBT transferring flag is set in the signaling sent by the SCP. The voice resource platform keeps on playing the CRBT customized by the called party to the calling party, or does not reset the CRBT so as to keep on playing the CRBT customized by the called party. The solution avoids the ring back tone reset during call transfer, enables the voice resource platform to continuously play one CRBT to the calling party; therefore, the calling party can always hear a continuous CRBT.

### BRIEF DESCRIPTION OF THE DRAWINGS

Figure 1 is a schematic diagram illustrating a system structure for providing CRBT service during call transfer in the prior art.
Figures 2A and 2B are flowcharts illustrating implementation of a CRBT service during call transfer in the prior art.
Figures 3A, 3B, 3C and 3D are flowcharts illustrating implementation of a CRBT service during call transfer according to one embodiment of the present invention.
Figures 4A, 4B, 4C and 4D are flowcharts illustrating implementation of a CRBT service during call transfer according to another embodiment of the present invention.

### DETAILED DESCRIPTION OF THE INVENTION

Detailed description of the present invention is given as follows with reference to embodiments.

In one embodiment, a system structure similar to that illustrated in figure 1 is employed. In this embodiment, if a called party subscribes to a No-reply transfer service and both the called party and a second called party subscribe to CRBT services, the call is diverted to the second called party when the called party does not answer a call in a preset time period. Also in this embodiment, a CRBT transferring flag that identifies whether the called party is an active subscriber to both the CRBT service and call transfer service is included in a signaling sent by an SCP to an SSP, and then subsequent processes may be performed according to the CRBT transferring flag.

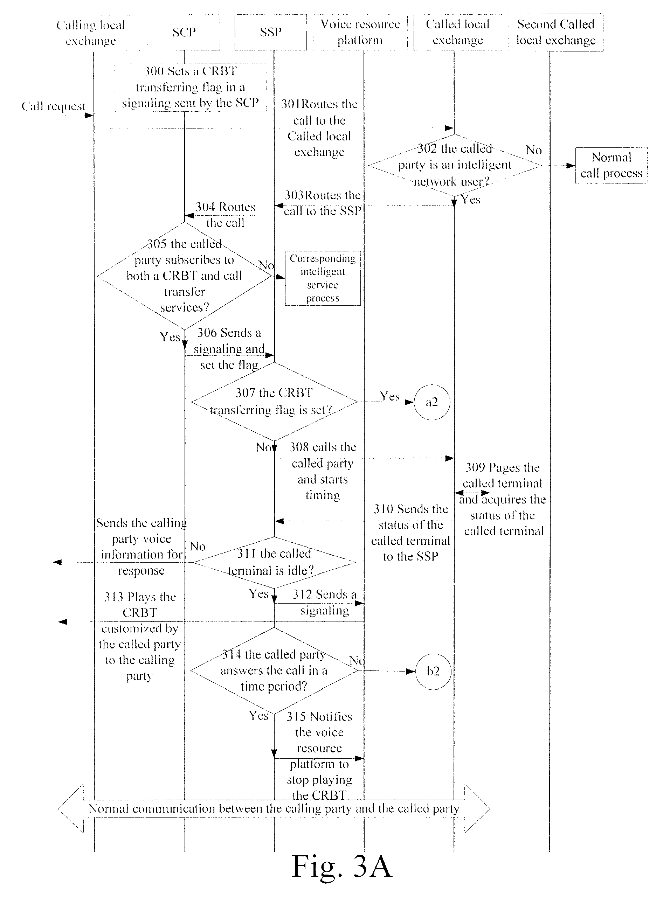

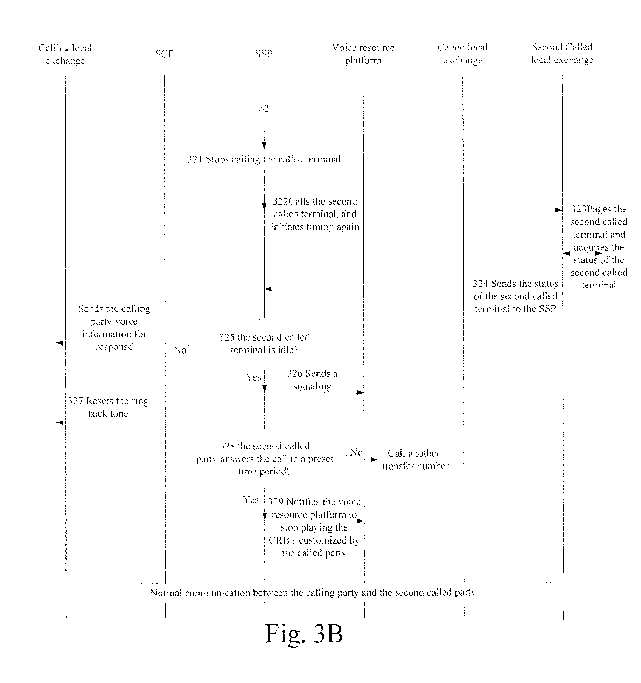

As shown in Figures 3A and 3B, this embodiment may include several steps.

Step 300: Set a CRBT transferring flag in a signaling sent from an SCP to an SSP.

The CRBT transferring flag may use a newly added bit in the signaling to indicate whether a called number of the call is an active subscriber to both the CRBT service and No-reply transfer service. However, if a bit is added to the signaling, the format of signaling needs to be modified. Therefore, in this embodiment, a reserved bit in the signaling may be used as the CRBT transferring flag. The reserved bit may be set to indicate whether the called number of the call is an active subscriber to both the CRBT service and No-reply transfer service. A Connect signaling is described as follows as an example; the format of the Connect signaling is shown as follows:

```
      Connect parameter:: = sequence {
      Destination address [0] Destination address
      Ring mode[1] Ring mode option
      Related ID [2] Related ID option
      Dividing and compensation [3] Dividing and compensation option
              ...
              }
```

Whether the CRBT transferring flag uses a bit added into the Connect signaling or uses a reserved bit of the Connect signaling, the format of the CRBT transferring flag may be:
CRBT transferring flag [*] CRBT transferring flag option,
wherein the value of the option may be set to 0 or 1. If the value of the option is set to 1, the called number of the call is an active subscriber to both the CRBT service and No-reply transfer service; if the value of the option is set to 0, the call is not an active subscriber to both the CRBT service and No-reply transfer service.

Step 301: A calling party initiates a call to a called party by sending a call request via a calling terminal to a called terminal of the called party. A calling local exchange receives the call request from the calling terminal and routes the call to the called local exchange.

Steps 302 to 304: The called local exchange determines whether the called party subscribes to an intelligent network service according to information stored in the called local exchange. If the called party is an intelligent network service user, the called local exchange routes the call to an SSP, and the SSP routes the call to an SCP. If the called party is not an intelligent network service user, the called local exchange processes the call according to normal call processes.

Step 305: The SCP determines whether the called party is an active subscriber to both the CRBT service and the No-reply transfer service according to record information stored in the SCP. If the called party is an active subscriber to both the CRBT service and the No-reply transfer service, step 306 and follow-up steps may be performed, otherwise, the corresponding intelligent network service may be carried out. For example, a CRBT service or other service is performed.

Step 306: The SCP sends a signaling to the SSP, and sets the CRBT transferring flag to 1 to indicate that the call is an active subscriber to both the CRBT service and No-reply transfer service. After receives the signaling from the SCP, the SSP may call the called party and divert the call.

Step 307: Upon receipt of the signaling from the SCP, the SSP determines whether the CRBT transferring flags set to 1. If the CRBT transferring flag has been set to 1, step 311 and follow-up steps may be performed. That is, the back ring tone is not reset during the call transfer process, and the CRBT customized by the called party is played continuously to the calling party. If the value of the CRBT transferring flags 0, step 308 may be performed, i.e. the back ring tone is reset during the call transfer.

Steps 308 to 310: The SSP calls the called party, and starts timing. Upon receipt of the call from the SSP, the called local exchange pages the called terminal, acquires the status of the called terminal, and sends the status to the SSP.

Step 311: The SSP determines whether the called terminal is idle according to the status of the called terminal. If the called terminal is idle, step 312 and follow-up steps may be performed. If the called terminal is busy, the SSP sends to the calling terminal via the calling local exchange voice information played by the called local exchange indicating the status of the called terminal.

Step 312: The SSP sends the voice resource platform a signaling to notify the voice resource platform to play a CRBT to the calling party. The signaling includes at least a calling number of the calling party and a called number of the called party.

Step 313: Upon receipt of the signaling from the SSP, the voice resource platform searches for the CRBT customized by the called party according to the called number, and plays the CRBT to the calling party via the calling local exchange.

Steps 314 to 315: The SSP determines whether the called party answers the call in a preset time period. If the called answers the call in the preset time period, the called terminal may send a response to the called local exchange and the called local exchange sends the response to the SSP. Upon receipt of the response, the SSP notifies the voice resource platform to stop playing the CRBT, and establishes a voice channel between the calling terminal and the called terminal for communication between the calling party and the called party. If the called party does not answer the call in the preset time period, step 321 and follow-up steps may be performed.

As shown in Figure 3B, steps 321 and 322, the SSP stops calling the called terminal, but calls the second called terminal, and initiates timing again.

Steps 323 and 324: Upon receipt of the call from the SSP, the second called local exchange pages the second called terminal, acquires the status of the second called terminal, and sends the status of the second called terminal to the SSP.

Step 325, the SSP determines whether the second called terminal is idle according to the status of the second called terminal received. If the second called terminal is idle, step 326 may be performed. If the second called terminal is busy, the SSP sends to the calling terminal via the calling local exchange voice information played by the second called local exchange indicating the status of the second called terminal.

Step 326: The SSP sends the voice resource platform a signaling to notify the voice resource platform to play a CRBT to the calling party. The signaling may include at least the calling number and the second called number.

Step 327: Upon receipt of the signaling from the SSP, the voice resource platform resets the ring back tone. That is, the SSP may stop playing the CRBT customized by the called party to the calling party, search for the CRBT customized by the second called party according to the second called number in the signaling received, and play the CRBT customized by the second called party to the calling party via the calling local exchange.

Steps 328 and 329: The SSP determines whether the second called party answers the call in a preset time period. If the second called party answers the call in the preset time period, the second called terminal sends a response to the second called local exchange. The second called local exchange sends the response to the SSP. Upon receipt of the response, the SSP notifies the voice resource platform to stop playing the CRBT, establishes a voice channel between the calling terminal and the second called terminal for communication between the calling party and the second called party. If the second called party does not answer the call in the preset time period, the SSP may call another transfer number. The process is similar to that described in steps 321 to 329. If there is not another transfer number available, the SSP releases the call.

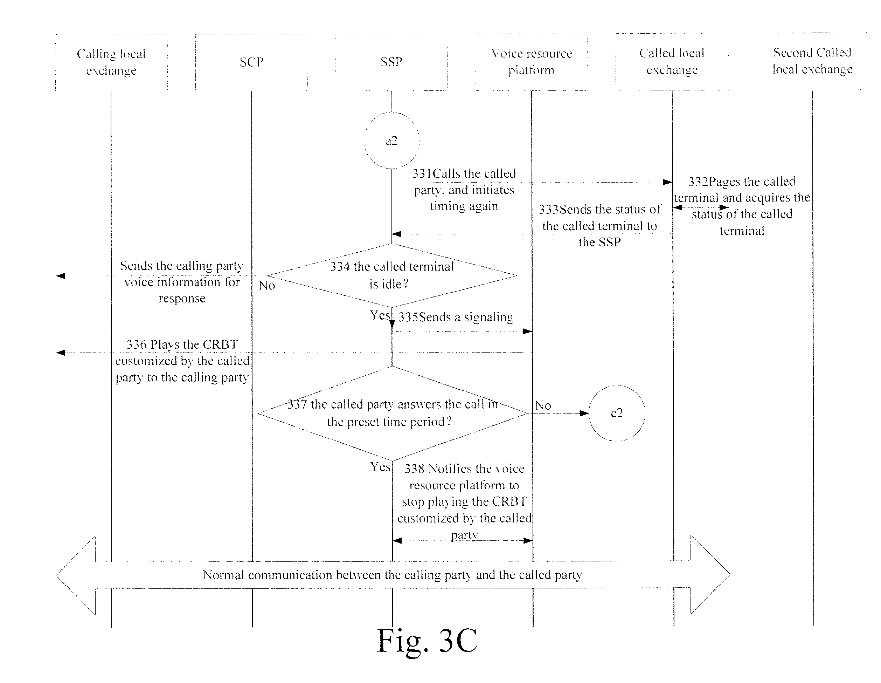

As shown in figure 3C, steps 331 to 333, the SSP calls the called party and starts timing. Upon receipt of the call from the SSP, the called local exchange pages the called terminal, acquires the status of the called terminal, and sends the status to the SSP.

Step 334: The SSP determines whether the called terminal is idle according to the status of the called terminal. If the called terminal is idle, step 335 and follow-up steps may be performed. If the called terminal is busy, the SSP sends to the calling terminal via the calling local exchange voice information played by the called local exchange indicating the status of the called terminal.

Step 335: The SSP sends the voice resource platform a signaling to notify the voice resource platform to play a CRBT to the calling party. The signaling includes at least a calling number of the calling party and a called number of the called party.

Step 336: Upon receipt of the signaling from the SSP, the voice resource platform searches for the CRBT customized by the called party according to the called number, and plays the CRBT to the calling party via the calling local exchange.

Steps 337 to 338: The SSP determines whether the called party answers the call in the preset time period. If the called party answers the call in the preset time period, the called terminal may send a response to the called local exchange and the called local exchange sends the response to the SSP. Upon receipt of the response, the SSP notifies the voice resource platform to stop playing the CRBT, and establishes a voice channel between the calling terminal and the called terminal for communication between the calling party and the called party. If the called does not answer the call in the preset time period, step 341 and follow-up steps may be performed.

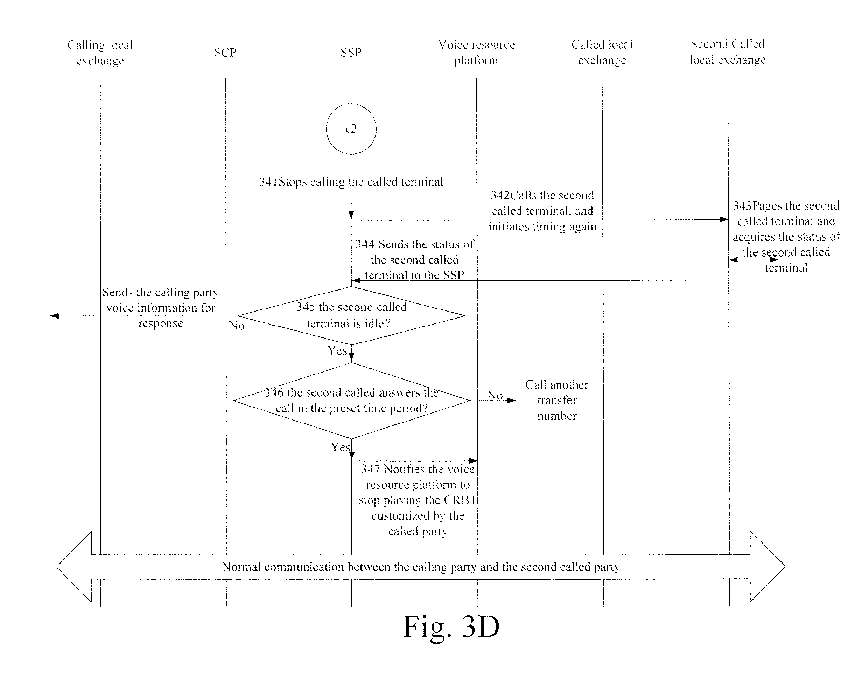

As shown in Figure 3D, steps 341 and 342. the SSP stops calling the called terminal, but calls the second called terminal, and initiates timing again.

Steps 343 and 344: Upon receipt of the call from the SSP, the second called local exchange pages a second called terminal, acquires the status of the second called terminal, and sends the status of the second called terminal to the SSP.

Step 345: The SSP determines whether the second called terminal is idle according to the status of the second called terminal received. If the second called terminal is idle, step 346 may be performed. If the second called terminal is busy, the SSP sends to the calling terminal via the calling local exchange voice information played by the second called local exchange indicating the status of the second called terminal.

Steps 346 and 347: The SSP determines whether the second called party answers the call in a preset time period. If the second called party answers the call in the preset time period, the second called terminal sends a response to the second called local exchange. The second called local exchange sends the response to the SSP. Upon receipt of the response, the SSP notifies the voice resource platform to stop playing the CRBT customized by the called party, establishes a voice channel between the calling terminal and the second called terminal for communication between the calling party and the second called party. If the second called party did not answer the call in the preset time period, the SSP may call another transfer number. The process is similar to that described in steps 341 to 347. If there is no transfer number available, the SSP releases the call.

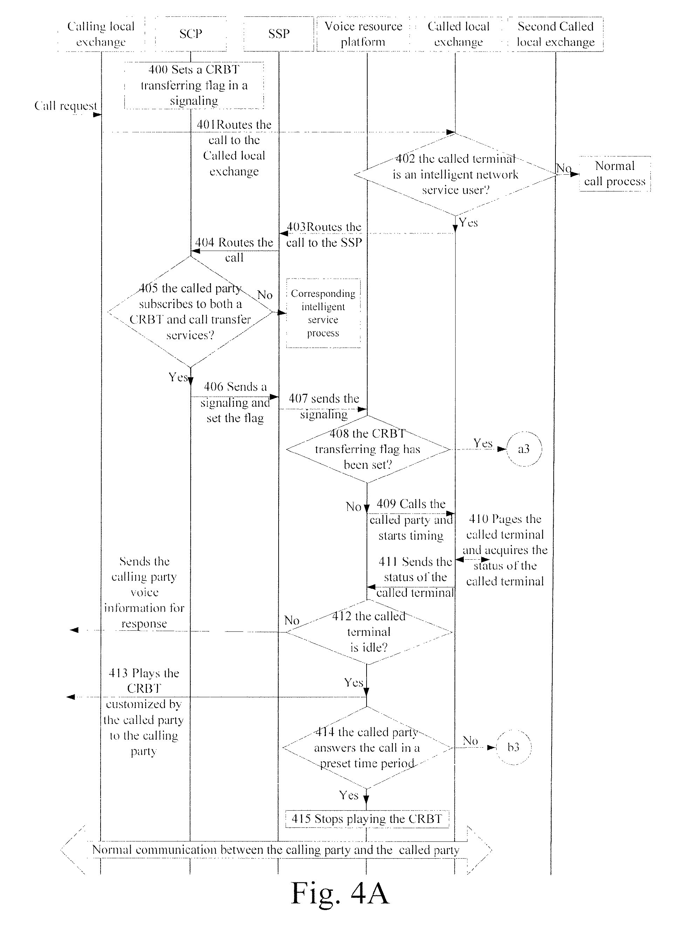

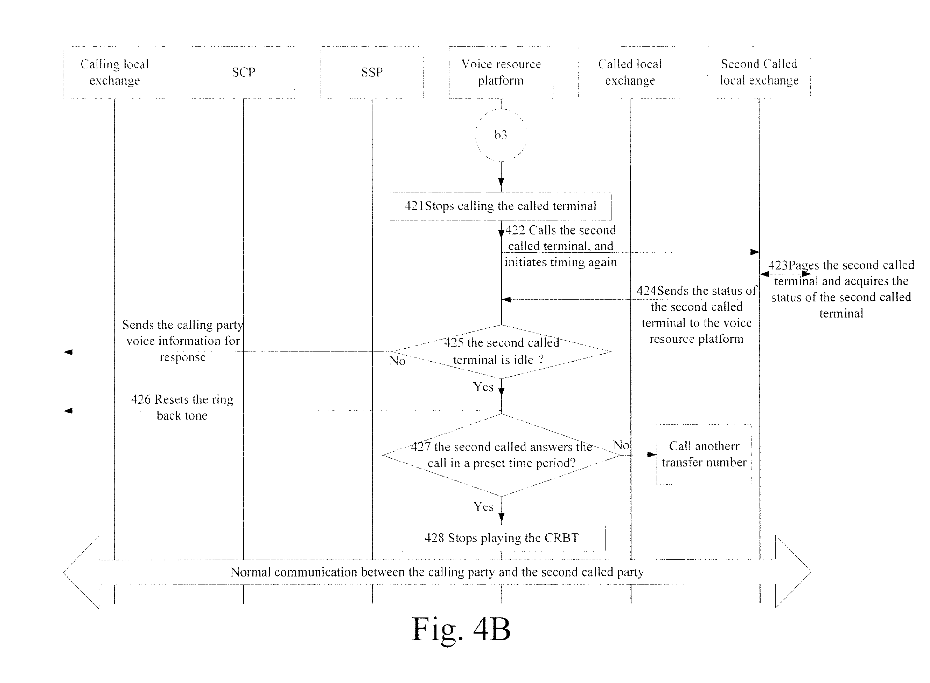

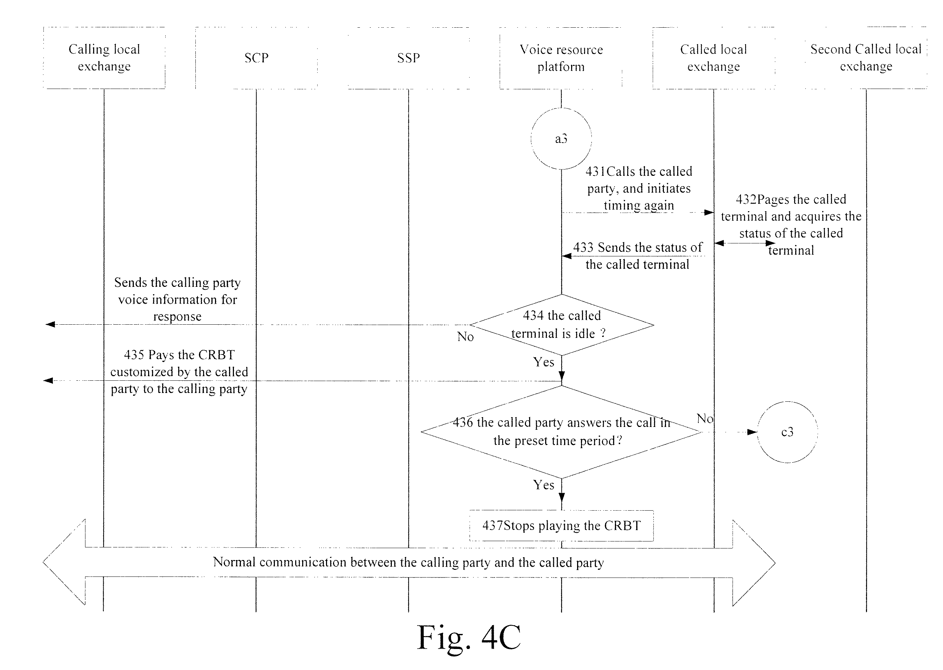

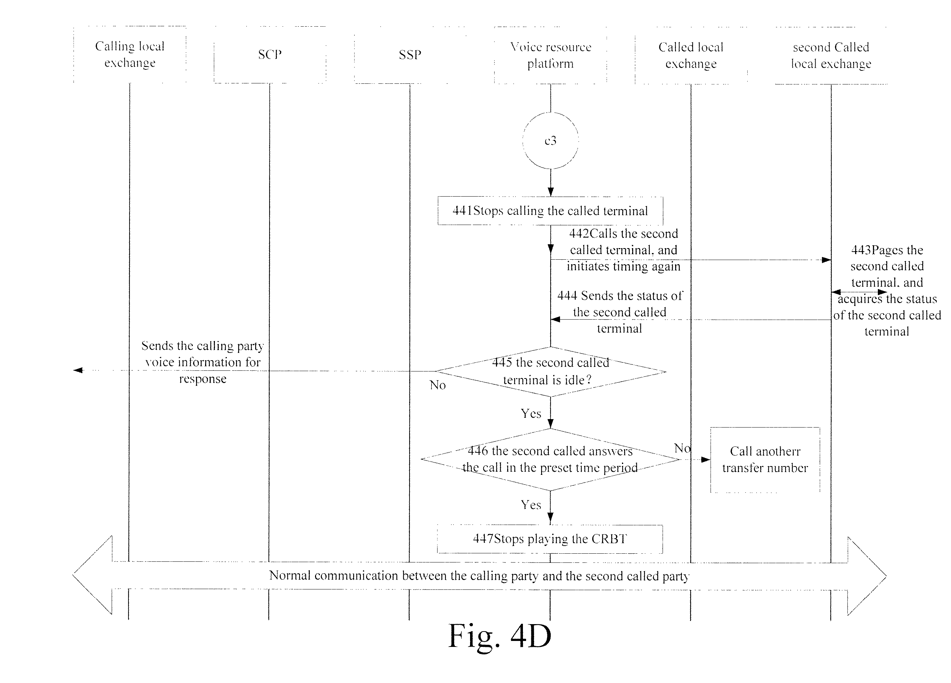

In the above embodiment, the SSP also connects to the voice resource platform while establishing a connection to the called local exchange. However, in actual applications, some SSPs may not support simultaneous connections to both the called local exchange and the voice resource platform. In such cases, the SSPs in the system need to be upgraded and therefore the network cost is increased. Therefore, another embodiment is also proposed in Figures 4A and 4B. As discussed in the embodiment above, the SSP functions as a service executing device for carrying out special services and calls the called party and the second called party, however, in this embodiment, the voice resource platform functions as a service executing device for carrying out special services and calls the called party and the second called party. Therefore, in this embodiment, the SSP does not need to connect both the called local exchange and the voice resource platform at the same time. Also in this embodiment, the voice resource platform determines whether the CRBT transferring flag has been set, and proceeds to following processes according to whether a CRBT transferring flag has been set or not, which avoids additional modifications to the SSP.

This embodiment may also include several steps:
Step 400: Set a CRBT transferring flag in a signaling sent from an SCP to an SSP.
Step 401: A calling party initiates a call to a called party by sending a call request via a calling terminal to a called terminal of the called party. A calling local exchange receives the call request from the calling terminal and routes the call to the called local exchange.
Steps 402 to 404: The called local exchange determines whether the called party subscribes to an intelligent network service according to information stored in the called local exchange. If the called party is an intelligent network service user, the called local exchange routes the call to the SSP, and the SSP routes the call to the SCP. If the called party is not an intelligent network service user, the called local exchange processes the call according to normal call processes.
Step 405: The SCP determines whether the called party is an active subscriber to both the CRBT service and the No-reply transfer service according to record information stored in the SCP. If the called party is an active subscriber to both the CRBT service and the No-reply transfer service, step 406 may be performed; otherwise, a corresponding intelligent network service may be carried out.
Step 406: The SCP sends a signaling to the SSP to instruct a service executing device, i.e. the voice resource platform, to call the called party and divert the call, and sets the CRBT transferring flag. For example, the SCP sets the CRBT transferring flag to 1 to indicate that the called party is an active subscriber to both the CRBT service and No-reply transfer service. The SCP also adds routing information of the voice resource platform into the signaling.
Step 407: Upon receipt of the signaling from the SCP, the SSP sends the signaling to the voice resource platform according to the routing information in the signaling.
Step 408: Upon receipt of the signaling from the SCP, the voice resource platform determines whether the CRBT transferring flag has been set, i.e. whether the value of the CRBT transferring flags 1. If the CRBT transferring flag has been set, i.e. the value of the CRBT transferring flags 1, step 431 may be performed. That is, the CRBT may not be reset during the call transfer, and the CRBT customized by the called party is continuously played to the calling party. If the CRBT transferring flag has not been set, i.e. the value of the CRBT transferring flags 0, step 409 may be performed, i.e. the CRBT is reset during the call transfer.
Steps 409 to 411: The voice resource platform calls the called party, and starts timing. Upon receipt of the call from the voice resource platform, the called local exchange pages the called terminal, acquires the status of the called terminal, and sends the status to the voice resource platform.
Step 412: The voice resource platform determines whether the called terminal is idle according to the status of the called terminal. If the called terminal is idle, step 413 may be performed. If the called terminal is busy, the voice resource platform sends to the calling terminal via the calling local exchange voice information played by the called local exchange indicating the status of the called terminal.
Step 413: The voice resource platform searches for the CRBT customized by the called party according to the called number of the called party and plays the CRBT to the calling party via the calling local exchange.
Steps 414 to 415: The voice resource platform determines whether the called party answers the call in a preset time period. If the called answers the call in the preset time period, the called terminal may send a response to the called local exchange and the called local exchange sends the response to the voice resource platform. Upon receipt of the response, the voice resource platform stops playing the CRBT, and establishes a voice channel between the calling terminal and the called terminal for communication between the calling party and the called party. If the called does not answer the call in the preset time period, step 421 may be performed.

As shown in figure 4B, steps 421 to 424, the voice resource platform stops calling the called terminal, calls a second called terminal, and initiates timing again. Upon receipt of the call from the voice resource platform, the second called local exchange pages the second called terminal, acquires the status of the second called terminal, and sends the status of the second called terminal to the voice resource platform.
Step 425: The voice resource platform determines whether the second called terminal is idle according to the status of the second called terminal received. If the second called terminal is idle, step 426 may be performed. If the second called terminal is busy, the voice resource platform sends to the calling terminal via the calling local exchange voice information played by the second called local exchange indicating the status of the second called terminal.
Step 426: The voice resource platform resets the ring back tone, i.e. stops playing the CRBT customized by the called party to the calling party, searches for the CRBT customized by the second called party according to the second called number, and plays the CRBT customized by the second called party to the calling party via the calling local exchange.
Steps 427 and 428: The voice resource platform determines whether the second called party answers the call in a preset time period. If the second called party answers the call in the preset time period, the second called terminal sends a response to the second called local exchange. The second called local exchange sends the response to the voice resource platform. Upon receipt of the response, the voice resource platform stops playing the CRBT customized by the second called party, establishes a voice channel between the calling terminal and the second called terminal for communication between the calling party and the second called party. If the second called party did not answer the call in the preset time period, the voice resource platform may call another transfer number. The process is similar to that described in steps 421 to 428. If there is no transfer number available, the voice resource platform releases the call.

As shown in steps 431 to 433, the voice resource platform calls the called party, and starts timing. Upon receipt of the call from the voice resource platform, the called local exchange pages the called terminal, acquires the status of the called terminal, and sends the status to the voice resource platform.
Step 434: The voice resource platform determines whether the called terminal is idle according to the status of the called terminal. If the called terminal is idle, step 435 may be performed. If the called terminal is busy, the voice resource platform sends to the calling terminal via the calling local exchange voice information played by the called local exchange indicating the status of the called terminal.
Step 435, the voice resource platform searches for the CRBT customized by the called party according to the called number of the called party and plays the CRBT to the calling party via the calling local exchange.
Steps 436 to 437: The voice resource platform determines whether the called party answers the call in a preset time period. If the called answers the call in the preset time period, the called terminal may send a response to the called local exchange and the called local exchange sends the response to the voice resource platform. Upon receipt of the response, the voice resource platform stops playing the CRBT, and establishes a voice channel between the calling terminal and the called terminal for communication between the calling party and the called party. If the called does not answer the call in the preset time period, step 441 may be performed.

As shown in steps 441 to 444, the voice resource platform stops calling the called terminal, calls a second called terminal, and initiates timing again. Upon receipt of the call from the voice resource platform, the second called local exchange pages the second called terminal, acquires the status of the second called terminal, and sends the status of the second called terminal to the voice resource platform.
Step 445: The voice resource platform determines whether the second called terminal is idle according to the status of the second called terminal received. If the second called terminal is idle, step 446 may be performed. If the second called terminal is busy, the voice resource platform sends to the calling terminal via the calling local exchange voice information played by the second called local exchange indicating the status of the second called terminal.
Steps 446 and step 447: The voice resource platform determines whether the second called party answers the call in a preset time period. If the second called party answers the call in the preset time period, the second called terminal sends a response to the second called local exchange. The second called local exchange sends the response to the voice resource platform. Upon receipt of the response, the voice resource platform stops playing the CRBT customized by the second called party, establishes a voice channel between the calling terminal and the second called terminal for communication between the calling party and the second called party. If the second called party did not answer the call in the preset time period, the voice resource platform may call another transfer number. The process is similar to the process for calling the second called party. If there is not another transfer number available, the voice resource platform releases the call.

In the above embodiments, the called terminal and the second called terminal may correspond to a same terminal exchange or different terminal exchanges. When the called terminal and the second called terminal correspond to the same terminal exchange, the second called local exchange in the embodiments may be the called local exchange. The calling terminal, called terminal and second called terminal may be but not limited to fixed subscriber terminals in PSTN, mobile terminals in Global System for Mobile communication (GSM) or mobile terminal in a Code Division Multiple Access (CDMA) system,.

The CRBT customized by the called party and the CRBT customized by the second called party in the embodiments may be customized by using the called number and the second called number, respectively. The solution proposed by the embodiments of the present invention is also available in UMS services. A user of a UMS service publishes his/her UMS number, once the UMS number is dialed, the system diverts the call to all phones numbers of the user in turn, including an office phone number, home phone number, GSM cellular phone number, CDMA cellular phone number and personal handy phone number etc. If the UMS number is registered for a CRBT service, the voice resource platform plays the CRBT customized by the UMS subscriber to a calling party every time, therefore the CRBT customized by the called party or second calle the UMS number.

The above are only preferred embodiments of the present invention and are not used in limiting the present invention. Various modifications, equivalent replacements or improvements made under the principles of the present invention fall within the protection scope of the present invention.

## Claims

1. A method for providing coloring ring back tone during call transfer, comprising:
receiving, by an intelligent network service trigger point, a call initiated by a calling party to a called party, determining whether the called party is an intelligent network service subscriber, and triggering the call to a Service Control Point if the called party is the intelligent network service subscriber;
determining, by the Service Control Point, whether the called party is an active subscriber to both a Coloring Ring Back Tone service and a call transfer service, sending a signaling to a service executing device if the called party is the active subscriber to both the Coloring Ring Back Tone service and the call transfer service, and setting a Coloring Ring Back Tone transferring flag; and
determining, by the service executing device upon receipt of the signaling, whether the Coloring Ring Back Tone transferring flag is set, and playing a Coloring Ring Back Tone customized by the called party to the calling party if the Coloring Ring Back Tone transferring flag is set.

2. A method according to Claim 1, wherein the service executing device comprises a Service Switching Point.

3. A method according to Claim 2, wherein playing the Coloring Ring Back Tone customized by the called party to the calling party comprises:
paging, by the Service Switching Point, the called party and acquiring status of the called party, notifying a voice resource platform to play the Coloring Ring Back Tone customized by the called party to the calling party if the called party is idle;
paging, by the Service Switching Point, a second called party if the called party does not answer the call in a preset time period, acquiring status of the second called party, and playing the Coloring Ring Back Tone customized by the called party to the calling party if the second called is idle.

4. A method according to Claim 1, wherein the service executing device comprises a voice resource platform.

5. A method according to Claim 4, wherein playing the Coloring Ring Back Tone customized by the called party to the calling party comprises:
paging, by the voice resource platform, the called party and acquiring status of the called party, playing the Coloring Ring Back Tone customized by the called party to the calling party if the called party is idle;
paging, by the voice resource platform, a second called party if the called party does not answer the call in a preset time period, acquiring status of the second called party, and playing the Coloring Ring Back Tone customized by the called party to the calling party if the second called is idle.

6. A method according to Claim 4 or 5, wherein sending the signaling to the service executing device by the Service Control Point comprises:
sending, by the Service Control Point, the signaling to a Service Switching Point, and adding routing information of the voice resource platform into the signaling,
sending, by the Service Switching Point, the signaling to the voice resource platform according to the routing information in the signaling.

7. A method according to any of Claims 1 to 5, wherein the Coloring Ring Back Tone transferring flag uses a bit newly added into the signaling sent by the Service Control Point, or uses a reserved bit of the signaling sent by the Service Control Point.

8. A method according to Claim 7, wherein the signaling comprises a Connect signaling.

9. A method according to any of Claims 1 to 5, the intelligent network service trigger point comprises a called switching device.

10. A method according to any of Claims 1 to 5, wherein the Coloring Ring Back Tone customized by the called party is customized by use of a called number of the called party or a Unified Message Service UMS number of the called party.
